# EUROPÄISCHE PATENTSCHRIFT

(11) **EP 3 585 560 B1**
(45) Veröffentlichungstag und Bekanntmachung des Hinweises auf die Patenterteilung: **09.10.2024**
(21) Anmeldenummer: 18706699.8
(22) Anmeldetag: 16.02.2018
(51) Int. Cl.: B24B 13/00, B24B 13/005, B23Q 7/14, B29D 11/00

(54) **ANLAGE UND VERFAHREN ZUR BEARBEITUNG OPTISCHER LINSEN**
INSTALLATION AND METHOD FOR MACHINING OPTICAL LENSES
INSTALLATION ET PROCÉDÉ POUR L'USINAGE DE LENTILLES OPTIQUES

(30) Priorität: 22.02.2017 DE 102017001680
(43) Veröffentlichungstag der Anmeldung: 01.01.2020
(73) Patentinhaber: Schneider GmbH & Co. KG, 35112 Fronhausen (DE)
(72) Erfinder: HUTTENHUIS, Stephan, 35096 Niederweimar (DE); SCHNEIDER, Gunter, 35037 Marburg (DE)
(74) Vertreter: Von Rohr Patentanwälte Partnerschaft mbB
(86) Internationale Anmeldenummer: PCT/EP2018/053900
(87) Internationale Veröffentlichungsnummer: WO 2018/153787

(56) Entgegenhaltungen:
- EP-A1- 2 489 469
- WO-A2-2013/131656
- DE-A1- 10 353 553
- JP-A- S60 146 646
- US-A1- 2015 105 892
- BEAT KONRAD: "On-block Manufacturing Back side processing advantages", 6 May 2016 (2016-05-06), pages 1 - 23, XP055471305, Retrieved from the Internet <URL:http://www.satisloh.com/fileadmin/contents/Whitepaper/On-Block-Manufacturing_EN.pdf> [retrieved on 20180427]

## Beschreibung

Die vorliegende Erfindung betrifft eine Anlage zur Bearbeitung von Linsen gemäß dem Oberbegriff des Anspruchs 1 sowie ein Verfahren zur Bearbeitung von Linsen gemäß dem Oberbegriff des Anspruchs 10. Eine derartige Anlage und ein derartiges Verfahren ist z.B. aus der Druckschrift "Beat Konrad: "On-block Manufacturing Back side processing advantages",, 6. Mai 2016 (2016-05-06), Seiten 1-23, XP055471305" bekannt.

Linsen, insbesondere Brillengläser, werden zur Bearbeitung üblicherweise an einem sogenannten Blockstück als Halter mittels eines sogenannten Blockmaterials geblockt, also befestigt bzw. gehalten. Das Blockstück dient dazu, die daran befestigte - also geblockte - Linse sehr präzise und definiert für einige oder mehrere Bearbeitungen zu halten. Danach wird die Linse wieder abgeblockt, also von dem Blockstück gelöst. Im Hinblick auf eine kostengünstige Linsenfertigung soll dies auf einfache Weise effizient und schnell erfolgen.

Als Blockmaterial können Legierungen mit niedriger Schmelztemperatur und Thermoplaste, also thermoplastische Materialien, oder nicht-thermoplastische Materialien, insbesondere aushärtende Klebstoffe, aber auch Klebebänder oder dergleichen eingesetzt werden. Je nach eingesetztem Blockmaterial ergeben sich unterschiedliche Anforderungen bzw. Verfahrensabläufe beim Abblocken, also Lösen der Linse von dem Blockstück bzw. Blockmaterial.

Die DE 103 53 553 A1 offenbart eine Anlage und ein Verfahren zum Abblocken von Brillengläsern, also Linsen für Brillen, wobei die Linsen mittels einer bandartigen Fördereinrichtung zum Abblocken durch ein temperiertes Wasserbad und dann nach dem Trennen vom Blockstück kontinuierlich nacheinander durch mehrere Reinigungseinrichtungen geführt bzw. gefördert werden. Diese Anlage baut relativ groß und gestattet keinen optimalen Durchsatz.

Die vorliegende Erfindung betrifft insbesondere eine Anlage und ein Verfahren mit mehreren Bearbeitungsvorrichtungen und/oder mit mindestens einer Bearbeitungslinie zur Bearbeitung von optischen Linsen, besonders bevorzugt Brillengläsern. Die Anlage bzw. Bearbeitungslinie umfasst insbesondere mehrere, insbesondere (weitgehend) unabhängig arbeitende Bearbeitungsvorrichtungen. Besonders bevorzugt umfasst die Bearbeitungslinie (auch) mehrere Bearbeitungsvorrichtungen für die gleiche Bearbeitung, um beispielsweise den Durchsatz zu erhöhen.

Die WO 2013/131656 A2 offenbart eine Anlage und ein Verfahren zum Bearbeiten optischer Linsen, wobei Linsen oder Transportträger mit Linsen unabhängig arbeitenden Bearbeitungsvorrichtungen wahlweise zugefördert werden, die eine Bearbeitungslinie bilden.

Der vorliegenden Erfindung liegt die Aufgabe zugrunde, eine Anlage und ein Verfahren zur Bearbeitung optischer Linsen anzugeben, wobei ein besonders effizienter Verfahrensablauf ermöglicht wird.

Die obige Aufgabe wird durch eine Anlage gemäß Anspruch 1 oder durch ein Verfahren gemäß Anspruch 10 gelöst. Vorteilhafte Weiterbildungen sind Gegenstand der Unteransprüche.

Besonders bevorzugt werden die Linsen in oder auf bzw. mittels Transportträgern von einer Blockvorrichtung zu einer oder mehreren Bearbeitungsvorrichtungen bzw. Bearbeitungslinien zur Bearbeitung der Linsen und schließlich wieder zu einer Abblockvorrichtung zum Abblocken der bearbeiteten Linsen gefördert. Insbesondere weist die Anlage ein Transportsystem zur Förderung der Linsen bzw. Transportträger auf.

Gemäß einem ersten Aspekt der vorliegenden Erfindung weist die Anlage vorzugsweise eine Kommissioniervorrichtung zur Bestückung der Transportträger mit zu bearbeitenden Linsen und mit zugeordneten Blockstücken auf. Dies ermöglicht einen vollautomatisierten und damit optimierten Verfahrensablauf.

Besonders bevorzugt werden oder sind die Transportträger mit einem Informationsträger, insbesondere Datenträger, Barcode o.dgl., ausgebildet bzw. versehen, der erforderliche Informationen für die Bearbeitung enthält oder zugänglich macht. Die Informationen bzw. Informationsträger werden besonders bevorzugt von der Kommissioniervorrichtung bereitgestellt, angebracht, geprüft, aktualisiert und/oder ausgetauscht. Besonders bevorzugt sind die Informationsträger elektronisch oder optisch lesbar. Die Informationen können insbesondere auch Bearbeitungsstatus, Auftragsnummern, Angaben zu den verwendeten Blockstücken und dergleichen enthalten oder zugänglich machen.

Gemäß einem zweiten, auch unabhängig realisierbaren Aspekt der vorliegenden Erfindung weist die Anlage vorzugsweise mindestens eine Rückfördervorrichtung zur Rückförderung der abgeblockten Blockstücke und/oder der Transportträger zu der Kommissioniervorrichtung auf. Dies gestattet einen automatisierten und optimierten Verfahrensablauf.

Bedarfsweise können die abgeblockten Blockstücke auch bzw. in oder mit den Transportträgern wieder zu der Kommissioniervorrichtung rückgefördert werden.

Alternativ kann die Rückförderung der Blockstücke und Transportträger separat - insbesondere also mit getrennten Rückfördervorrichtungen - erfolgen. Dies erfolgt insbesondere dann, wenn die Transportträger nach dem Abblocken weiter für den Transport der abgeblockten Linsen eingesetzt werden.

Nach dem Abblocken erfolgt vorzugsweise eine weitere Bearbeitung der Linsen, insbesondere ein Reinigen, ein Beschichten und/oder eine Randbearbeitung oder dergleichen. Auch hierzu können die Linsen in oder auf bzw. mittels Transportträgern von einer Vorrichtung zur nächsten befördert werden. Diese Transportträger können den vorgenannten entsprechen. Alternativ können hierzu auch zusätzliche Transportträger gemäß Zusatztyp eingesetzt werden, die anders, insbesondere kleiner, als die ursprünglichen Transportträger gemäß Standardtyp ausgebildet sind.

Vorzugsweise weist die Anlage eine Vorrichtung zum Reinigen der Transportträger gemäß Standardtyp und/oder Zusatztyp auf. Insbesondere ist die Vorrichtung in die Abblockvorrichtung, die Kommissioniervorrichtung oder eine sonstige Vorrichtung, wie eine optionale Speichervorrichtung zur Zwischenspeicherung von Transportträgern, integriert. Jedoch kann es sich auch eine um eine separate Vorrichtung handeln.

Vorzugsweise weist die Anlage eine Vorrichtung zur insbesondere optischen Überprüfung der Transportträger gemäß Standardtyp und/oder Zusatztyp auf. Die Vorrichtung ist insbesondere in die Abblockvorrichtung, die Kommissioniervorrichtung oder eine sonstige Vorrichtung, wie eine Speichervorrichtung, integriert. Jedoch kann es sich auch um eine separate Vorrichtung handeln.

Vorzugsweise weist die Anlage eine Vorrichtung zur insbesondere optischen Überprüfung der Blockstücke auf. Die Vorrichtung ist insbesondere in die Abblockvorrichtung, die Kommissioniervorrichtung und/oder eine sonstige Vorrichtung, wie eine Speichervorrichtung, die insbesondere der Zwischenspeicherung von Blockstücken dient, integriert. Jedoch kann es sich auch um eine separate Vorrichtung handeln.

Vorzugsweise weist die Anlage eine Vorrichtung zur Sortierung der Blockstücke nach Größe und/oder Form auf. Die Vorrichtung ist insbesondere in die Abblockvorrichtung, die Kommissioniervorrichtung oder eine sonstige Vorrichtung, wie eine Speichervorrichtung für Blockstücke, integriert. Jedoch kann es sich auch um eine separate Vorrichtung handeln.

Sofern zusätzliche Transportträger nach dem Abblocken für die Förderung bzw. den Transport der abgeblockten Linsen, insbesondere zur weiteren Bearbeitung, eingesetzt werden, weist die Anlage vorzugsweise eine zusätzliche Rückfördervorrichtung zur Rückförderung der Transportträger gemäß Zusatztyp insbesondere zu der Abblockvorrichtung auf. So wird insbesondere auch eine Zirkulation oder Kreisförderung der zusätzlichen Transportträger ermöglicht.

Gemäß einem dritten, auch unabhängig realisierbaren Aspekt der vorliegenden Erfindung wird bzw. werden vorschlagsgemäß durch die Anlage bzw. das Verfahren insbesondere ein erster und/oder zweiter Kreislauf für die Transportträger und/oder ein eigener, weiterer bzw. dritter Kreislauf für die Blockstücke gebildet. Insbesondere können zwei getrennte Kreisläufe für die Transportträger des Standardtyps einerseits und die Transportträger des Zusatztyps andererseits gebildet werden. Dies ist einem automatisierten und optimierten Verfahrensablauf zuträglich.

Gemäß einem vierten, auch unabhängig realisierbaren Aspekt der vorliegenden Erfindung werden die Transportträger und/oder abgeblockten Blockstücke direkt zu der Blockvorrichtung gefördert. Weiter erfolgt dann eine entsprechende Zuförderung der zu bearbeitenden Linsen zu der Blockvorrichtung. Nach dem Blocken werden die Transportträger mit den geblockten Linsen maschinell bestückt. Dies gestattet ebenfalls einen automatisierten und optimierten Verfahrensablauf.

Gemäß einem fünften, auch unabhängig realisierbaren Aspekt der vorliegenden Erfindung zeichnet sich ein vorschlagsgemäßes Verfahren insbesondere dadurch aus, dass die Linsen in oder auf Transportträgern von der Blockvorrichtung zu den Bearbeitungsvorrichtungen und der Abblockvorrichtung gefördert werden, wobei die Transportträger nach ihrer Benutzung, insbesondere nach dem Abblocken oder direkt von der Abblockvorrichtung, mittels einer Rückfördervorrichtung rückgefördert werden und entweder in der Blockvorrichtung mit zu bearbeitenden, geblockten Linsen und/oder in der Kommissioniervorrichtung mit zu bearbeitenden bzw. ungeblockten Linsen und optionalen Blockstücken bestückt werden. Dies gestattet einen automatisierten und damit optimierten Verfahrensablauf.

Gemäß einem sechsten, auch unabhängig realisierbaren Aspekt der vorliegenden Erfindung werden die abgeblockten Blockstücke mittels Transportträgern und/oder einer Rückfördervorrichtung von der Abblockvorrichtung zu der Kommissioniervorrichtung oder direkt zu der Blockvorrichtung rückgefördert. Besonders bevorzugt werden die Blockstücke optional zwischengespeichert und/oder in der Kommissioniervorrichtung, sofern erforderlich, ausgetauscht bzw. zwischengespeichert. Dies gestattet einen automatisierten und damit optimierten Verfahrensablauf.

Vorzugsweise werden die Informationen bzw. Informationsträger, mit denen die Transportträger bzw. deren Informationsträger optional versehen sind, wieder automatisiert gelöscht oder entfernt oder aktualisiert bzw. ausgetauscht. Dies kann beispielsweise in der Abblockvorrichtung oder bei der letzten Bearbeitungsvorrichtung, bei der Reinigung, beim insbesondere optischen Überprüfen und/oder beim Neubestücken, insbesondere in der Kommissioniervorrichtung, erfolgen.

Besonders bevorzugt werden die Transportträger, insbesondere vom Standardtyp und/oder Zusatztyp, gereinigt und/oder optisch überprüft. Dies erfolgt automatisiert, so dass ein optimierter Verfahrensablauf ermöglicht wird.

Vorzugsweise werden die abgeblockten Blockstücke maschinell gereinigt und/oder optisch überprüft. Dies erfolgt insbesondere maschinell, so dass ein automatisierter und damit optimierter Verfahrensablauf ermöglicht wird.

Besonders bevorzugt werden die abgeblockten, also benutzten Blockstücke hinsichtlich ihrer Größe und/oder Form sortiert und/oder überprüft. Dies erfolgt insbesondere maschinell, so dass ein automatisierter und damit optimierter Verfahrensablauf ermöglicht wird. Anschließend werden die Blockstücke vorzugsweise wiederverwendet.

Gemäß einem siebten, auch unabhängig realisierbaren Aspekt der vorliegenden Erfindung ist es auch möglich, die abgeblockten, also benutzten Blockstücke wieder "aufzuarbeiten". Dies kann durch eine formgebende bzw. mechanische Bearbeitung erfolgen, beispielsweise wenn das Blockmaterial aushärtet und sich mit dem Blockstück fest, dauerhaft bzw. unlösbar verbindet.

Die aufgearbeiteten bzw. überprüften Blockstücke werden dann wieder verwendet, insbesondere wieder der Blockvorrichtung zugeführt. Insbesondere erfolgt die Zuführung wieder über die Kommissioniervorrichtung, wo die Transportträger mit den Blockstücken zusammen mit den zu bearbeitenden Linsen bestückt und dann der Blockvorrichtung zugefördert werden.

Jedoch sind auch andere Förderabläufe möglich. Insbesondere können die Blockstücke und zu bearbeitenden Linsen bedarfsweise auch getrennt der Blockvorrichtung zugefördert werden.

Gemäß einem achten, auch unabhängig realisierbaren Aspekt der vorliegenden Erfindung ist es auch möglich, dass die Linsen auf ihrer Blockseite - insbesondere erst unmittelbar - vor dem Blocken bzw. in der Anlage mit einer Schutzschicht oder Schutzfolie versehen werden und dass die Schutzschicht bzw. Schutzfolie nach dem Abblocken der jeweiligen Linse wieder entfernt wird, insbesondere in der Abblockvorrichtung und/oder vor einem Beschichten der Blockseite und/oder vor einer weiteren Bearbeitung, besonders bevorzugt Randbearbeitung, der jeweiligen Linse. Dies gestattet einen optimierten und/oder vollautomatisierten Verfahrensablauf.

Weitere Aspekte, Merkmale, Vorteile und Eigenschaften der vorliegenden Erfindung ergeben sich aus den Ansprüchen und der nachfolgenden Beschreibung bevorzugter Ausführungsformen anhand der Zeichnung. Es zeigt:
- Fig. 1: eine schematische Darstellung einer vorschlagsgemäßen Anlage mit mehreren Bearbeitungsvorrichtungen gemäß einer ersten Ausführungsform;
- Fig. 2: einen schematischen Schnitt einer geblockten Linse 2; und
- Fig. 3: eine schematische Darstellung einer vorschlagsgemäßen Anlage gemäß einer zweiten Ausführungsform.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

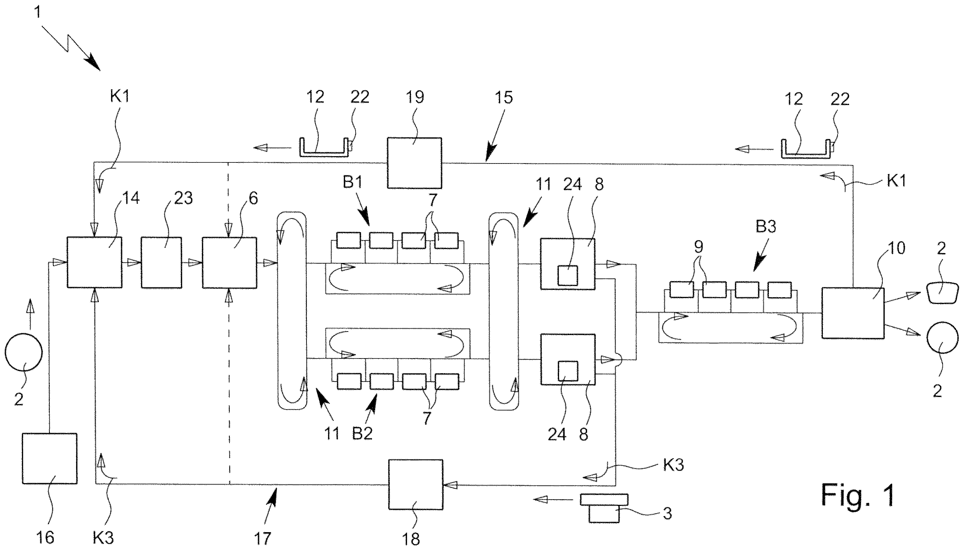

Fig. 1 zeigt in einer schematischen Darstellung eine vorschlagsgemäße Anlage 1 zur Bearbeitung von optischen Linsen 2, also eine Linsenbearbeitungsanlage.

Besonders bevorzugt handelt es sich bei der Linse 2 um ein sogenanntes Brillenglas, also eine Linse für eine Brille.

Die Linse 2 besteht vorzugsweise aus Kunststoff, kann gegebenenfalls aber auch aus Glas oder dergleichen bestehen.

Die Linse 2 weist vorzugsweise einen Durchmesser von mehreren Zentimetern, insbesondere von mehr als 3 cm auf.

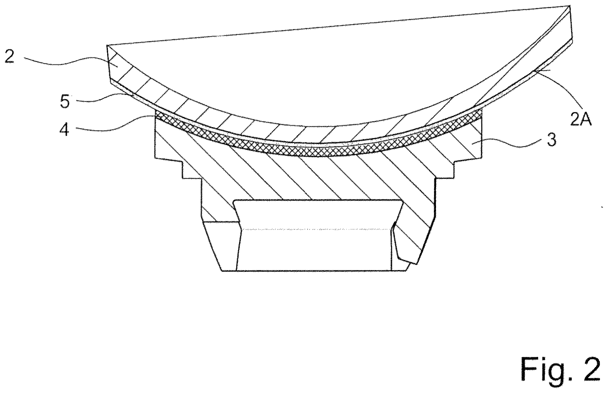

Fig. 2 zeigt in einem schematischen Schnitt eine Linse 2, die auf einem zugeordneten Blockstück 3 mittels eines Blockmaterials 4 geblockt, also temporär befestigt, ist.

Das Blockstück 3 ist insbesondere zu einer Einspannung mit definierter Drehlage für eine Bearbeitung der zugeordneten Linse 2 ausgebildet.

Das Blockmaterial 4 ist besonders bevorzugt ein Thermoplast, wie insbesondere in der WO 2011/018231 A1 beschrieben. Grundsätzlich kann es sich aber auch um eine Legierung mit niedrigem Schmelzpunkt oder um ein sonstiges Material, beispielsweise einen Klebstoff, einen Klebestreifen oder dergleichen, handeln.

Optional ist auf der dem Blockmaterial 4 bzw. Blockstück 3 zugewandten Seite bzw. Blockseite 2A der Linse 2 eine Schutzschicht bzw. Schutzfolie 5 angeordnet oder vorgesehen, wie in Fig. 2 schematisch angedeutet. Die Schutzfolie 5 ist insbesondere auf die Linse 2 bzw. Blockseite 2A der Linse 2 aufgeklebt und dient insbesondere einem Schutz dieser schon fertig bearbeiteten bzw. geformten Flachseite bzw. Blockseite 2A der Linse 2.

Grundsätzlich ist es jedoch auch möglich, die Linse 2 ohne die Schutzschicht bzw. Schutzfolie 5 direkt mittels des Blockmaterials 4 zu blocken.

Die vorschlagsgemäße Anlage 1 weist vorzugsweise eine Blockvorrichtung 6 zum Blocken - also temporären Befestigen - einer zu bearbeitenden Linse 2 an einem zugeordneten Blockstück 3 mittels des Blockmaterials 4 auf.

Die Anlage 1 weist vorzugsweise eine oder mehrere Bearbeitungsvorrichtungen 7, 9 zur Bearbeitung der insbesondere geblockten Linsen 2 auf.

Die Bearbeitungsvorrichtungen 7, 9 sind insbesondere als separate Bearbeitungsvorrichtungen und/oder zur unabhängigen Bearbeitung der Linsen 2 ausgebildet.

Die Bearbeitungsvorrichtungen 7, 9 dienen insbesondere unterschiedlichen Bearbeitungen. Weiter sind vorzugsweise einige oder mehrere Bearbeitungsvorrichtungen 7, 9 zur gleichen Bearbeitung ausgebildet, um unter Berücksichtigung der Zeit für eine Bearbeitung einen höheren Durchsatz und/oder eine Redundanz bei Ausfall einer Bearbeitungsvorrichtung 7, 9 zu erreichen.

Die Bearbeitungsvorrichtungen 7, 9 ermöglichen beispielsweise eine formgebende, insbesondere mechanische bzw. spanende oder fräsende Bearbeitung einer Flachseite oder optisch wirksamen Seite der Linsen 2, eine Randbearbeitung der Linsen 2, ein Polieren der Linsen 2, ein Prüfen bzw. Messen der Linsen 2, ein Markieren von Linsen 2 und/oder ein Beschichten von Linsen 2.

Bedarfsweise können auch mehrere gleichartige Bearbeitungsvorrichtungen 7, 9, beispielsweise zwei oder mehr Bearbeitungsvorrichtungen 7, 9 für die gleiche Bearbeitung, vorhanden bzw. in die Anlage 1 integriert sein. Beispielsweise können mehrere Bearbeitungsvorrichtungen 7 zur formgebenden Bearbeitung oder mehrere Bearbeitungsvorrichtungen 7 zum Polieren vorgegeben sein. Dies hängt insbesondere von dem Durchsatz der verschiedenen Bearbeitungsvorrichtungen 7 und/oder den gewünschten Bearbeitungen ab.

Ein besonderer Vorteil der vorschlagsgemäßen Anlage 1 besteht darin, dass zusätzliche Bearbeitungsvorrichtungen 7, 9 auch später je nach Bedarf noch in die Anlage 1 sehr leicht integriert bzw. eingebunden werden können, Erweiterungen also sehr einfach erfolgen können.

Besonders bevorzugt bilden mehrere Bearbeitungsvorrichtungen 7 eine Bearbeitungslinie B.

Die vorschlagsgemäße Anlage 1 weist vorzugsweise eine oder mehrere Bearbeitungslinien B auf. insbesondere weist die Anlage 1 mindestens eine Bearbeitungslinie B1 zur Bearbeitung von geblockten Linsen 2, insbesondere zur formgebenden Bearbeitung wenigstens einer Flachseite und/oder zum Polieren, und vorzugsweise mindestens eine weitere Bearbeitungsvorrichtung 9 bzw. Bearbeitungslinie B3 zur weiteren Bearbeitung von ungeblockten Linsen 2, insbesondere zum Reinigen, zum Beschichten, zur Randbearbeitung, zum Prüfen und/oder zum Verpacken, auf. Beim Darstellungsbeispiel weist die Anlage 1 zwei Bearbeitungslinien B1 und B2 zur Bearbeitung von geblockten Linsen 2 und eine Bearbeitungslinie B3 zur weiteren Bearbeitung von ungeblockten Linsen 2 auf.

Die Anlage 1 weist vorzugsweise mindestens eine Abblockvorrichtung 8 zum Abblocken der insbesondere schon mindestens einer Bearbeitung unterzogenen Linsen 2, also zum Trennen bzw. Lösen der Linsen 2 von dem zugeordneten jeweils Blockstück 3, auf. Beim Darstellungsbeispiel weist die Anlage 1 vorzugsweise mehrere, hier zwei Abblockvorrichtungen 8 auf.

Das Abblocken erfolgt insbesondere nach der formgebenden Bearbeitung mindestens einer Flachseite bzw. optisch aktiven Seite der Linsen 2 und nach dem Polieren und/oder vor einem Beschichten und/oder vor einer Randbearbeitung der Linsen 2.

Besonders bevorzugt ist die Abblockvorrichtung 8 bzw. sind die Abblockvorrichtungen 8 der Bearbeitungslinie B1, B2 zur Bearbeitung von geblockten Linsen 2 nachgeordnet bzw. der Bearbeitungslinie B3 zur Bearbeitung von abgeblockten Linsen 2 vorgeordnet oder in die Bearbeitungslinie B1, B2 oder in die Bearbeitungslinie B3 integriert.

Nach dem Abblocken erfolgt vorzugsweise eine Entfernung der optionalen Schutzschicht bzw. Schutzfolie 5 von den Linsen 2. Hierzu weist die Anlage 1 bzw. Abblockvorrichtung 8 vorzugsweise eine Vorrichtung 24 auf, wie schematisch angedeutet. Die Vorrichtung 24 zum Entfernen der Schutzschicht bzw. Schutzfolie 5 ist insbesondere in die Abblockvorrichtung(en) 8 integriert, kann aber auch als eine separate Vorrichtung 24 ausgeführt und/oder in die nachfolgende bzw. weitere Bearbeitung oder Bearbeitungslinie B3 integriert sein.

Weiter kann auch ein zusätzliches oder für ein nachfolgendes Beschichten der Linsen 2 ausreichendes bzw. angepasstes Reinigen der abgeblockten Linsen 2 in der Abblockvorrichtung 8 bzw. Vorrichtung 24 erfolgen.

Nach dem Abblocken erfolgt vorzugsweise die weitere Bearbeitung bzw. Endbearbeitung der abgeblockten Linsen 2, insbesondere ein Reinigen, ein Beschichten, eine Randbearbeitung - besonders bevorzugt zur Anpassung an ein Brillengestell bzw. eine Brillenfassung -, ein Prüfen oder dergleichen, hier insbesondere durch die weiteren Bearbeitungsvorrichtungen 9 bzw. weitere Bearbeitungslinie B3. Schließlich erfolgt eine Abgabe der fertig bearbeiteten Linsen.

Die Anlage 1 weist vorzugsweise eine Abgabevorrichtung 10 zur Verpackung, Beschriftung, Zwischenspeicherung und/oder Abgabe der - vorzugsweise fertig - bearbeiteten Linsen 2 auf. In Fig. 1 ist schematisch angedeutet, dass die Linsen 2 je nach Bedarf bzw. erfolgter Bearbeitung als (fertig) randbearbeitete (also an ein Brillengestell angepasste) Linsen 2 oder als noch nicht randbearbeitete bzw. noch nicht an ein Brillengestell angepasste Linsen 2 ausgegeben bzw. abgegeben werden.

Die Randbearbeitung der Linsen 2 zur Anpassung an ein Brillengestell, ein Verpacken und/oder eine Qualitätssicherung bzw. Überprüfung der Linsen 2 kann bzw. können wahlweise bei der weiteren Bearbeitung, in oder nach der Abgabevorrichtung 10 bzw. Anlage 1, bedarfsweise also auch später bzw. separat erfolgen.

Die Anlage 1 weist vorzugsweise mindestens ein Transportsystem 11 zum Transport der Linsen 2 bzw. von Transportträgern 12, 13 mit den Linsen 2 zu und von den Bearbeitungsvorrichtungen 7 bzw. Bearbeitungslinien B auf.

Bei der ersten Ausführungsform gemäß Fig. 1 ist beispielhaft lediglich eine Art von Transportträger 12 dargestellt, der nachfolgend insbesondere auch als "Standardtyp" bezeichnet wird und/oder der insbesondere sowohl zur Aufnahme mindestens einer Linse 2 als auch mindestens eines Blockstücks 3, besonders bevorzugt eines Paars von Linsen 2 und von zwei Blockstücken 3, ausgebildet ist.

Das Transportsystem 11 fördert die Linsen 2 bzw. Transportträger 12, 13 insbesondere von der Blockvorrichtung 6 zu den Bearbeitungsvorrichtungen 7 bzw. zumindest einer Bearbeitungslinie B1 oder B2 und von dort zu mindestens einer Abblockvorrichtung 8 und insbesondere bzw. optional zu weiteren Bearbeitungsvorrichtungen 9 bzw. der (weiteren) Bearbeitungslinie B3 und/oder zu der Abgabevorrichtung 10, wie in Fig. 1 schematisch bzw. durch die die Förderung andeutenden Pfeile gezeigt.

Das Transportsystem 11 ist insbesondere aus mehreren Fördervorrichtungen, wie Förderbändern, Manipulationseinrichtungen oder dergleichen, aufgebaut.

Das Transportsystem 11 ist insbesondere derart aufgebaut, dass eine wahlweise Förderung der Linsen 2 bzw. Transportträger 12, 13 zu und von den einzelnen Bearbeitungslinien B1 bis B3, den einzelnen Bearbeitungsvorrichtungen 7, 9 einer Bearbeitungslinie B1, B2, B3 und/oder den Abblockvorrichtungen 8 ermöglicht wird.

Schließlich ermöglicht das Transportsystem 11 eine Förderung der Linsen 2 bzw. Transportträger 12, 13 zu der mindestens einen Abgabevorrichtung 10.

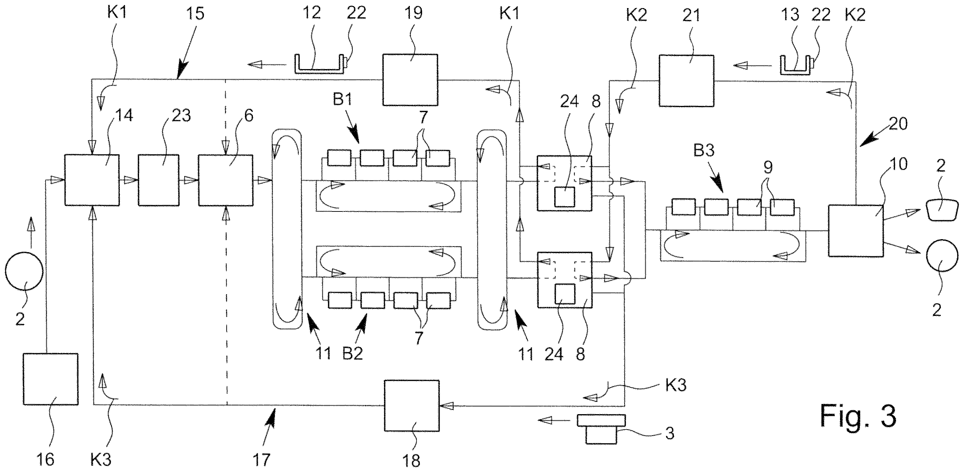

Je nach Realisierung können auch unterschiedliche Transportträger 12, 13 eingesetzt werden. Fig. 3 zeigt in einer zu Fig. 1 korrespondierenden schematischen Darstellung eine zweite Ausführungsform der vorschlagsgemäßen Anlage 1. Hier sind zwei unterschiedliche Arten von Transportträgern 12 und 13 angedeutet. Insbesondere ist zusätzlich zum Transportträger 12 vom Standardtyp auch ein weiterer Transportträger 13 angedeutet, der nachfolgend auch als "Zusatztyp" bezeichnet wird und/oder der insbesondere kleiner als der Transportträger 12 vom Standardtyp und/oder nur zur Aufnahme von ein oder zwei (ungeblockten) Linsen 2 ausgebildet ist.

Die Transportträger 12, 13 sind vorzugsweise kistenartig und/oder nach oben hin offen und/oder zur losen Aufnahme bzw. Halterung der Linsen 2 und/oder Blockstücke 3 ausgebildet.

Optional sind die Transportträger 12 und/oder 13 jeweils mit einem Informationsträger 22 zur Bereitstellung von Informationen über die jeweils mit dem Transportträger 11, 12 transportierten Linsen 2 und/oder Blockstücke 3 versehen. Die Informationen enthalten insbesondere alle für die Bearbeitung wesentlichen Angaben und/oder ermöglichen das Abrufen der für die Bearbeitung erforderlichen Angaben, beispielsweise über eine Systemsteuerung, Datenbank oder sonstige Verwaltung der Anlage 1 bzw. eines zugeordneten Linsenmanagementsystems oder dergleichen.

Die Anlage 1 weist vorzugsweise eine Kommissioniervorrichtung 14 zur insbesondere voll automatisierten oder teilautomatisierten Bestückung der Transportträger 12 mit zu bearbeitenden Linsen 2 und Blockstücken 3 auf. Die Kommissioniervorrichtung 14 ist der Blockvorrichtung 6 vorgeordnet.

Insbesondere fördert das Transportsystem 11 mit Linsen 2 und Blockstücken 3 bestückte Transportträger 12 von der Kommissioniervorrichtung 14 zu der Blockvorrichtung 6.

Optional weist die Anlage 1 eine Vorrichtung 23 zum Aufbringen der Schutzschicht bzw. Schutzfolie 5 auf die Linse 2 bzw. deren Blockseite 2A auf. Diese Vorrichtung 23 ist vorzugsweise der Kommissioniervorrichtung 14 nachgeordnet und/oder der Blockvorrichtung 6 vorgeordnet.

Die Vorrichtung 23 kann in die Kommissioniervorrichtung 14 und/oder Blockvorrichtung 6 integriert oder als separate Vorrichtung, wie in Fig. 1 angedeutet, ausgeführt sein. Im letztgenannten Fall fördert vorzugsweise das Transportsystem 11 die Linsen 2, insbesondere mittels der Transportträger 12, zunächst zu der Vorrichtung 23 zum Aufbringen der Schutzschicht bzw. Schutzfolie 5 und dann von dieser wieder weiter, insbesondere zu der Blockvorrichtung 6. Besonders bevorzugt erfolgt also eine Förderung der bestückten Transportträger 12 von der Kommissioniervorrichtung 14 zu der Vorrichtung 23 und anschließend zu der Blockvorrichtung 6. Jedoch ist es grundsätzlich auch möglich, dass die Vorrichtung 23 anders in die Anlage 1 eingebunden ist, beispielsweise der Kommissioniervorrichtung 14 vorgeordnet ist.

In der Blockvorrichtung 6 werden die Linse 2 und das zugehörige Blockstück 3 vorzugsweise automatisiert entnommen und in gewünschter Weise geblockt. Anschließend wird derselbe oder ein anderer Transportträger 12 mit der geblockten Linse 2 von der Blockvorrichtung 6 wieder bestückt.

Beim Darstellungsbeispiel trägt der Transportträger 11 vorzugsweise ein Paar von Linsen 2, insbesondere zur Bildung von zwei Brillengläsern einer Brille, und zwei zugeordnete Blockstücke 3. Entsprechend wird der Transportträger 11 nach dem Blocken von der Blockvorrichtung 6 vorzugsweise wieder mit zwei zu einer Brille gehörenden, geblockten Linsen 2 bestückt.

Es ist anzumerken, dass die Anlage 1 auch mehrere Blockvorrichtungen 6 aufweisen kann, die beispielsweise wahlweise oder je nach Auslastung oder Auslegung mit den zu blockenden Linsen 2 bzw. damit versehenen Transportträgern 12 von dem Transportsystem 11 beschickt bzw. versorgt werden.

Besonders bevorzugt werden die Transportträger 12 nach deren Benutzung wieder mittels einer (ersten) Rückfördervorrichtung 15 rückgefördert und mit zu bearbeitenden Linsen 2 (insbesondere also Linsenrohlingen) und optional Blockstücken 3 maschinell bestückt. Dies erfolgt beim Darstellungsbeispiel besonders bevorzugt in oder mittels der Kommissioniervorrichtung 14.

Alternativ ist es jedoch auch möglich, dass die Transportträger 12 nach der Benutzung bzw. mittels der Rückfördervorrichtung 15 an die Blockvorrichtung 6 rückgefördert werden, wie in Fig. 1 gestrichelt angedeutet. In diesem Fall kann die Kommissioniervorrichtung 14 entfallen. Die Transportträger 12 werden dann in der bzw. von der Blockvorrichtung 6 vorzugsweise maschinell mit den bereits geblockten Linsen 2 bestückt.

Besonders bevorzugt erfolgt die Bestückung der Transportträger 12 jedoch automatisiert in der Kommissioniervorrichtung 14.

Die zu bearbeitenden Linsen 2 bzw. Linsenrohlinge werden vorzugsweise von einer Speichervorrichtung 16 der Anlage 1 bereitgestellt, insbesondere der Kommissioniervorrichtung 14 zugefördert. Die Speichervorrichtung 16 kann insbesondere mit der Kommissioniervorrichtung 14 direkt gekoppelt oder in diese integriert sein.

Insbesondere kann ein Auspacken der Linsen 2 bzw. Linsenrohlinge teilautomatisiert oder vollautomatisiert in der bzw. durch die Speichervorrichtung 16 oder Kommissioniervorrichtung 14 erfolgen.

Die abgeblockten bzw. benutzten Blockstücke 3 werden von der Abblockvorrichtung 8 bzw. jeder Abblockvorrichtung 8 vorzugsweise wieder maschinell rückgefördert, hier insbesondere zu der Kommissioniervorrichtung 14.

Die Rückförderung erfolgt beim Darstellungsbeispiel vorzugsweise mittels einer in Fig. 1 angedeuteten (zusätzlichen) Rückfördervorrichtung 17 für Blockstücke 3.

Besonders bevorzugt werden die Blockstücke 3 nach dem Abblocken, also nach der Benutzung, gereinigt, insbesondere optisch überprüft, sortiert und/oder zwischengespeichert. Dies kann insbesondere in der Abblockvorrichtung 8 und/oder mittels einer separaten Vorrichtung 18, die in Fig. 1 schematisch angedeutet ist, und/oder in der Kommissioniervorrichtung 14 erfolgen.

Besonders bevorzugt erfolgt das Reinigen, insbesondere Entfernen von Blockmaterial 4, in der (jeweiligen) Abblockvorrichtung 8.

Das vorzugsweise optische Überprüfen der Blockstücke 3, insbesondere auf vollständiges Entfernen des Blockmaterials 4, Beschädigungen oder dergleichen erfolgt besonders bevorzugt in der Abblockvorrichtung 8 oder Vorrichtung 18.

Das Sortieren oder Überprüfen der Blockstücke 2, insbesondere nach Größe und/oder Form, erfolgt besonders bevorzugt in der Blockvorrichtung 6, der Abblockvorrichtung 8, der Vorrichtung 18 und/oder der Kommissioniervorrichtung 14.

Die optionale Zwischenspeicherung der Blockstücke 3 erfolgt besonders bevorzugt in der Abblockvorrichtung 8, der Vorrichtung 18 und/oder der Kommissioniervorrichtung 14.

Wenn die Zwischenspeicherung in der Abblockvorrichtung 8 oder Vorrichtung 18 erfolgt, werden entsprechende oder erforderliche bzw. passende Blockstücke 3 insbesondere auf entsprechende Anforderung der Blockvorrichtung 6 bzw. Kommissioniervorrichtung 14 hin bzw. bedarfsgerecht und/oder gesteuert durch ein nicht dargestelltes Linsenmanagementsystem der Anlage 1 oder dergleichen, der Kommissioniervorrichtung 14 bedarfsgerecht zugefördert.

Die Kommissioniervorrichtung 14 legt dann die zu bearbeitenden Linsen 2 und die Blockstücke 3 insbesondere von oben bzw. lose in die Transportträger 12.

Alternativ besteht auch die Möglichkeit, die abgeblockten Blockstücke 3 direkt der Blockvorrichtung 6 zuzufördern, wie in Fig. 1 gestrichelt angedeutet.

Die Transportträger 12 werden bei der in Fig. 1 dargestellten ersten Ausführungsform vorzugsweise erst von der Abgabevorrichtung 10 abgegeben bzw. freigegeben und von dort rückgefördert.

Die freigegebenen Transportträger 12 werden vorzugsweise gereinigt, mit anderen Informationen und/oder anderen Informationsträgern 22 versehen, insbesondere optisch überprüft und/oder zwischengespeichert. Dies kann insbesondere in einer der Rückfördervorrichtung 15 zugeordneten bzw. separaten Vorrichtung 19 erfolgen.

Insbesondere erfolgt die Reinigung der Transportträger 12 in der Abgabevorrichtung 10, der Vorrichtung 19, der Kommissioniervorrichtung 14, der Blockvorrichtung 6 und/oder der Abblockvorrichtung 8.

Das vorzugsweise optische Überprüfen der Transportträger 12, insbesondere im Hinblick auf eine erfolgreich durchgeführte Reinigung oder erforderliche Reinigung, auf das Austauschen oder Entfernen der Informationsträger 22, auf Beschädigungen, Verschmutzungen oder dergleichen, erfolgt vorzugsweise in der Abgabevorrichtung 10, der Vorrichtung 19, der Kommissioniervorrichtung 14, der Blockvorrichtung 6 und/oder der Abblockvorrichtung 8.

Ein optionales Zwischenspeichern der Transportträger 12 erfolgt insbesondere in der Abgabevorrichtung 10, der Vorrichtung 19 und/oder der Kommissioniervorrichtung 14. Alternativ oder zusätzlich kann die Rückfördervorrichtung 15 eine entsprechende Zwischenspeicherung, beispielsweise durch eine Ringförderung der Transportträger 12 und ein bedarfsweises Ausleiten der entsprechenden Transportträger 12 zur Weiterförderung an die Kommissioniervorrichtung 14 ermöglichen.

Besonders bevorzugt wird also insbesondere eine Kreisförderung oder ein (erster) Kreislauf K1 der Transportträger 12 ermöglicht oder realisiert.

Alternativ oder zusätzlich können die Transportträger 12 bzw. geblockten Linsen 2 auch in der ersten und/oder zweiten Bearbeitungslinie B1, B2 und/oder in der Abgabevorrichtung 11 - besonders bevorzugt zur Zwischenspeicherung - zirkulieren bzw. im Kreislauf gefördert werden.

Alternativ oder zusätzlich können auch die abgeblockten Linsen 2 und/oder Transportträger 12 in der weiteren bzw. dritten Bearbeitungslinie 3 - insbesondere zur Zwischenspeicherung - zirkulieren bzw. im Kreislauf gefördert werden.

Besonders bevorzugt wird eine Kreisförderung oder ein (dritter bzw. weiterer) Kreislauf K3 der Blockstücke 3 ermöglicht oder realisiert.

Insbesondere können die Blockstücke 3 auch mittels nicht dargestellter Transportträger von der (jeweiligen) Abblockvorrichtung 8 wieder zum Blocken bzw. zur Kommissioniervorrichtung 14 oder Blockvorrichtung 6 gefördert werden, wobei dann diese Transportträger wiederum zirkulieren bzw. in einem (separaten) Kreislauf gefördert werden.

Nachfolgend wird die zweite Ausführungsform der vorschlagsgemäßen Anlage 1 anhand von Fig. 3 näher erläutert. Hierbei wird lediglich auf wesentliche Unterschiede näher eingegangen, so dass die bisherigen Ausführungen und Erläuterungen insbesondere ergänzend oder entsprechend gelten, auch ohne explizite Wiederholung.

Bei der zweiten Ausführungsform werden nach dem Abblocken für den Weitertransport der abgeblockten Linsen 2 vorzugsweise die Transportträger 13 des Zusatztyps eingesetzt bzw. verwendet.

Die Transportträger 12 des Standardtyps bzw. ursprünglich für den Transport der Linsen 2 verwendeten Transportträger 12 werden dann vorzugsweise direkt von oder nach der Abblockvorrichtung 8 wieder rückgefördert. Der Kreislauf K1 der Transportträger 12 verläuft hier also insbesondere ausgehend von der Kommissioniervorrichtung 14 über die optionale Vorrichtung 23 zum Aufbringen der Schutzschicht bzw. -folie 5, die Blockvorrichtung 6, die Bearbeitungsvorrichtungen 7 bzw. Bearbeitungslinien B1, B2, die Abblockvorrichtung(en) 8 und die optionale Vorrichtung 19 wieder zurück zu der Kommissioniervorrichtung 14.

Die zusätzlichen Transportträger 13 bzw. Transportträger 13 des Zusatztyps zirkulieren vorzugsweise durch die dritte Bearbeitungslinie B3 bzw. Nachbearbeitung.

Die Transportträger 12, 13 können grundsätzlich auch mit einer Abdeckung oder einem Deckel oder dergleichen versehen sein, um die Linsen 2 vor Verschmutzung zu schützen. Dies ist insbesondere für die zusätzlichen Transportträger 13 beim Transport bzw. bei der Förderrung von bereits für eine anschließende Beschichtung gereinigten Linsen 2 oder dergleichen vorteilhaft. Diese geschützte Förderung bzw. diese Ausführung der Transportträger 12, 13 zum Schutz der Linsen 2 stellt einen insbesondere auch unabhängig realisierbaren Aspekt der vorliegenden Erfindung dar.

Insbesondere weist die Anlage 1 eine Rückfördervorrichtung 20 zur Rückförderung der Transportträger 13 von der Abgabevorrichtung 10 zu der Abblockvorrichtung 8 bzw. den Abblockvorrichtungen 8 auf.

Für die zusätzlichen Transportträger 13 des Zusatztyps wird vorzugsweise also ein (zweiter) Kreislauf K2 ermöglicht oder realisiert, der ausgehend von der Abgabevorrichtung 10 über eine optionale Vorrichtung 21, die Abblockvorrichtung(en) 8 und die weiteren Bearbeitungsvorrichtungen 9 bzw. weitere Bearbeitungslinie B3 wieder zu der Abgabevorrichtung 10 verläuft.

Die zusätzlichen Transportträger 13 werden vorzugsweise gereinigt und/oder insbesondere optisch überprüft. Dies erfolgt besonders bevorzugt in der optionalen Vorrichtung 21, die insbesondere in die Rückfördervorrichtung 20 integriert oder dieser zugeordnet ist.

Das Reinigen der Linsenträger 13 nach der Benutzung kann wahlweise in der Abgabevorrichtung 10, der optionalen Vorrichtung 21 oder der (jeweiligen) Abblockvorrichtung 8 erfolgen.

Das insbesondere optische Überprüfen der zusätzlichen Transportträger 13, insbesondere im Hinblick auf eine erfolgreich durchgeführte oder erforderliche Reinigung, auf das Austauschen oder Entfernen der Informationsträger 22, das Vorliegen von Beschädigungen, Verschmutzungen oder dergleichen, kann wahlweise in der Abgabevorrichtung 10, der optionalen Vorrichtung 21 oder der (jeweiligen) Abblockvorrichtung 8 erfolgen.

Die zusätzlichen Transportträger 13 sind vorzugsweise ebenfalls mit Informationsträgern 22 versehen oder ausrüstbar, wie bereits für die Transportträger 12 des Standardtyps erläutert, so dass die diesbezüglichen Ausführungen und Erläuterungen insbesondere entsprechend auch für die zusätzlichen Transportträger 13 gelten. Die Informationen der Informationsträger 22 der Transportträger 13 können dann beispielsweise in der jeweiligen Abblockvorrichtung 8, insbesondere also beim Bestücken mit zu bearbeitenden Linsen 2, ausgetauscht, festgelegt, aktualisiert oder geändert werden.

Generell werden die Informationen der Informationsträger 22 von den Bearbeitungsvorrichtungen 7, 9 vorzugsweise gelesen, verwendet, geändert und/oder angepasst. Beispielsweise können aktuelle Bearbeitungsstati und/oder Eigenschaften bezüglich der Linsen 2 und/oder Blockstücke 3 gespeichert oder bereitgestellt werden.

Besonders bevorzugt enthalten die Informationen bzw. Informationsträger 22 eine Auftragsnummer, über die alle wesentlichen Informationen über die jeweiligen Linsen 2 und/oder Blockstücke 3 bzw. alle für die Bearbeitung wesentlichen Informationen und/oder ein Bearbeitungsstatus oder dergleichen von einzelnen Vorrichtungen, insbesondere den die Bearbeitung ausführenden Bearbeitungsvorrichtungen 7, 9 abrufbar sind. Diese Informationen werden beispielsweise von einem nicht dargestellten Linsenmanagementsystem, einer Datenbank oder dergleichen verwaltet, bereitgehalten und/oder abgerufen.

Insbesondere bei der zweiten Ausführungsform bietet es sich als eine Alternative - auch unabhängig von der weiteren Förderung bzw. Bearbeitung der Linsen 2 - an, die abgeblockten Blockstücke 3 mittels der Transportträger 12 von der jeweiligen Abblockvorrichtung 8 wieder rückzufördern, hier insbesondere zu der Kommissioniervorrichtung 14. In diesem Fall kann die separate Rückförderung der Blockstücke 3 bzw. die Rückfördervorrichtung 17 entfallen. Insbesondere wird so ein zumindest im Wesentlichen identischer oder gemeinsamer Kreislauf K1 für die Transportträger 12 und Blockstücke 3 gebildet oder ermöglicht.

Es ist anzumerken, dass die Förderungen, insbesondere durch das Transportsystem 11 und/oder die Rückfördervorrichtungen 15, 17 und/oder 20 besonders bevorzugt vollautomatisiert erfolgen, aber auch teilautomatisiert erfolgen können.

Generell ist anzumerken, dass die vorschlagsgemäßen Verfahren und vorschlagsgemäßen Anlagen 1 insbesondere ein Zirkulieren bzw. wahlweises Zufördern der Linsen 2 bzw. Linsenträger 12, 13 zu den einzelnen Bearbeitungsvorrichtungen 7, 9 bzw. verschiedenen Bearbeitungslinien B ermöglichen, wie insbesondere in der WO 2013/131656 A2 und/oder WO 2017/080639 beschrieben.

### Bezugszeichenliste

- 1: Anlage
- 2: Linse
- 2A: Blockseite
- 3: Blockstück
- 4: Blockmaterial
- 5: Schutzschicht/Schutzfolie
- 6: Blockvorrichtung
- 7: Bearbeitungsvorrichtung
- 8: Abblockvorrichtung
- 9: weitere Bearbeitungsvorrichtung
- 10: Abgabevorrichtung
- 11: Transportsystem
- 12: Transportträger
- 13: Transportträger
- 14: Kommissioniervorrichtung
- 15: Rückfördervorrichtung für Transportträger
- 16: Speichervorrichtung
- 17: Rückfördervorrichtung für Blockstücke
- 18: Vorrichtung
- 19: Vorrichtung
- 20: Rückfördervorrichtung für zusätzliche Transportträger
- 21: optionale Vorrichtung
- 22: Informationsträger
- 23: Vorrichtung zum Aufbringen der Schutzschicht
- 24: Vorrichtung zum Entfernen der Schutzschicht

- B: Bearbeitungslinie
- B1: erste Bearbeitungslinie
- B2: zweite Bearbeitungslinie
- B3: weitere Bearbeitungslinie
- K1: erster Kreislauf
- K2: zweiter Kreislauf
- K3: dritter Kreislauf

## Patentansprüche

1. Anlage (1) zur Bearbeitung von Linsen (2), insbesondere Brillengläsern,
mit einer Blockvorrichtung (6) zum Blocken einer zu bearbeitenden Linse (2) an einem Blockstück (3) mittels eines Blockmaterials (4),
mit mehreren Bearbeitungsvorrichtungen (7, 9) zur Bearbeitung der Linsen (2),
mit einer Abblockvorrichtung (8) zum Abblocken der bearbeiteten Linsen (2), und
mit einem Transportsystem (11) zur Förderung der Linsen (2) in oder auf Transportträgern (12, 13),
**dadurch gekennzeichnet,**
**dass** die Anlage (1) eine Rückfördervorrichtung (15, 17) zur Rückförderung der abgeblockten Blockstücke (3) und/oder der Transportträger (12) zu der Blockvorrichtung (6) oder zu einer Kommissioniervorrichtung (14) zur Bestückung der Transportträger (12) mit zu bearbeitenden Linsen (2) und Blockstücken (3) aufweist.

2. Anlage nach Anspruch 1, **dadurch gekennzeichnet, dass** die Anlage (1), Blockvorrichtung (6), Abblockvorrichtung (8) oder Kommissioniervorrichtung (14) eine Vorrichtung (19, 21) zum Reinigen der Transportträger (12, 13) aufweist.

3. Anlage nach Anspruch 1 oder 2, **dadurch gekennzeichnet**, die Anlage (1), Blockvorrichtung (6), Abblockvorrichtung (8) oder Kommissioniervorrichtung (14) eine Vorrichtung (19) zur optischen Überprüfung der Transportträger (12) aufweist.

4. Anlage nach einem der voranstehenden Ansprüche, **dadurch gekennzeichnet, dass** die Anlage (1), Blockvorrichtung (6), Abblockvorrichtung (8) oder Kommissioniervorrichtung (14) eine Vorrichtung (18) zur optischen Überprüfung der Blockstücke (3) aufweist.

5. Anlage nach einem der voranstehenden Ansprüche, **dadurch gekennzeichnet, dass** die Anlage (1), Blockvorrichtung (6), Abblockvorrichtung (8) oder Kommissioniervorrichtung (14) eine Vorrichtung (18) zum Speichern der Blockstücke (3) aufweist.

6. Anlage nach einem der voranstehenden Ansprüche, **dadurch gekennzeichnet, dass** die Anlage (1), Blockvorrichtung (6), Abblockvorrichtung (8) oder Kommissioniervorrichtung (14) eine Vorrichtung (18) zur Sortierung der Blockstücke (3) nach Größe und/oder Form aufweist.

7. Anlage nach einem der voranstehenden Ansprüche, **dadurch gekennzeichnet, dass** die Anlage (1) oder Abblockvorrichtung (8) eine Vorrichtung zum Entfernen einer Schutzschicht oder Schutzfolie (5) von den Linsen (2), insbesondere deren Blockseite (2A), aufweist.

8. Anlage nach einem der voranstehenden Ansprüche, **dadurch gekennzeichnet, dass** die Anlage (1), die Blockvorrichtung (6) oder die Kommissioniervorrichtung (14) eine Vorrichtung (23) zum Aufbringen einer Schutzschicht oder Schutzfolie (5) auf die Linsen (2), insbesondere deren Blockseite (2A), aufweist, vorzugsweise wobei die Vorrichtung (23) zum Aufbringen der Schutzschicht oder Schutzfolie (5) der Kommissioniervorrichtung (14) nachgeordnet und/oder der Blockvorrichtung (6) vorgeordnet ist.

9. Anlage nach einem der voranstehenden Ansprüche, **dadurch gekennzeichnet,**
**dass** die Anlage (1) eine Kommissioniervorrichtung (14) zur Bestückung der Transportträger (12) mit zu bearbeitenden Linsen (2) und Blockstücken (3) aufweist, und/oder
**dass** die Anlage (1) einen ersten und/oder zweiten Kreislauf (K1, K2) für die Transportträger (12, 13) und einen weiteren bzw. dritten Kreislauf (K3) für die Blockstücke (3) bildet bzw. aufweist.

10. Verfahren zur Bearbeitung von Linsen (2), insbesondere Brillengläsern, wobei die Linsen (2) von Bearbeitungsvorrichtungen (7, 9) bearbeitet werden, wobei jede Linse (2) für die Bearbeitung an einem Blockstück (3) mittels eines Blockmaterials (4) in einer Blockvorrichtung (6) geblockt und nach der Bearbeitung von dem Blockstück (3) in einer Abblockvorrichtung (8) wieder abgeblockt wird,
**dadurch gekennzeichnet,**
**dass** die Linsen (2) in oder auf Transportträgern (12) von der Blockvorrichtung (6) zu den Bearbeitungsvorrichtungen (7, 9) und der Abblockvorrichtung (8) gefördert werden, wobei die Transportträger (12) nach dem Abblocken oder von der Abblockvorrichtung (8) mittels einer Rückfördervorrichtung (15) rückgefördert werden und entweder in der Blockvorrichtung (6) mit zu bearbeitenden, geblockten Linsen (2) oder und/oder in einer Kommissioniervorrichtung (14) mit zu bearbeitenden Linsen (2) und optional Blockstücken (3) maschinell bestückt werden.

11. Verfahren nach Anspruch 10, **dadurch gekennzeichnet,**
**dass** die abgeblockten Blockstücke (3) mittels Transportträgern (12) und/oder einer Rückfördervorrichtung (17) von der Abblockvorrichtung (8) zu der Blockvorrichtung (6) oder einer vorgeordneten Kommissioniervorrichtung (14) maschinell rückgefördert werden, und/oder
**dass** die Transportträger (12, 13) in einem Kreislauf (K1, K2) und die Blockstücke (3) in einem weiteren bzw. separaten Kreislauf (K3) gefördert bzw. rückgefördert werden, und/oder
**dass** die Linsen (2) auf ihrer Blockseite (2A) vor dem Blocken mit einer Schutzschicht oder Schutzfolie (5) versehen werden und dass die Schutzschicht bzw. Schutzfolie (5) nach dem Abblocken der jeweiligen Linse (2) in der Abblockvorrichtung (8) und/oder vor einem Beschichten der Blockseite (2A) und/oder vor einer weiteren Bearbeitung, besonders bevorzugt Randbearbeitung, der jeweiligen Linse (2) wieder entfernt wird.

12. Verfahren nach Anspruch 10 oder 11, **dadurch gekennzeichnet, dass** die Transportträger (12) gereinigt und/oder optisch überprüft werden.

13. Verfahren nach einem der Ansprüche 10 bis 12, **dadurch gekennzeichnet, dass** die Blockstücke (3) nach Größe und/oder Form sortiert werden.

14. Verfahren nach einem der Ansprüche 10 bis 13, **dadurch gekennzeichnet, dass** die Blockstücke (3) optisch überprüft werden.

15. Verfahren nach einem der Ansprüche 10 bis 14, **dadurch gekennzeichnet, dass** die Transportträger (12, 13) mit Informationen bzw. Informationsträgern (22) bezüglich der Bearbeitung der jeweiligen Linsen (2) versehen werden, insbesondere wobei die Informationen von den Bearbeitungsvorrichtungen (7, 9) gelesen, verwendet, geändert und/oder angepasst werden.

## Claims

1. Installation (1) for processing lenses (2), in particular spectacle lenses,
with a blocking apparatus (6) for blocking a lens (2) to be processed on a block piece (3) by means of a blocking material (4),
with several processing apparatuses (7, 9) for processing the lenses (2),
with a deblocking apparatus (8) for deblocking the processed lenses (2), and
with a transport system (11) for conveying the lenses (2) in or on transport carriers (12, 13),
**characterised in**
**that** the installation (1) has a return conveying apparatus (15, 17) for return conveying the deblocked block pieces (3) and/or the transport carriers (12) to the blocking apparatus (6) or to a commissioning apparatus (14) for equipping the transport carriers (12) with lenses (2) to be processed and block pieces (3).

2. Installation according to claim 1, **characterised in that** the installation (1), blocking apparatus (6), deblocking apparatus (8) or commissioning apparatus (14) has an apparatus (19, 21) for cleaning the transport carriers (12, 13).

3. Installation according to claim 1 or 2, **characterised in that** the installation (1), blocking apparatus (6), deblocking apparatus (8) or commissioning apparatus (14) has an apparatus (19) for optical examination of the transport carriers (12).

4. Installation according to one of the preceding claims, **characterised in that** the installation (1), blocking apparatus (6), deblocking apparatus (8) or commissioning apparatus (14) has an apparatus (18) for optical examination of the block pieces (3).

5. Installation according to one of the preceding claims, **characterised in that** the installation (1), blocking apparatus (6), deblocking apparatus (8) or commissioning apparatus (14) has an apparatus (18) for storing the block pieces (3).

6. Installation according to one of the preceding claims, **characterised in that** the installation (1), blocking apparatus (6), deblocking apparatus (8) or commissioning apparatus (14) has an apparatus (18) for sorting the block pieces (3) according to size and/or shape.

7. Installation according to one of the preceding claims, **characterised in that** the installation (1) or deblocking apparatus (8) has an apparatus for removing a protective layer or protective film (5) from the lenses (2), in particular the blocking side (2A) thereof.

8. Installation according to one of the preceding claims, **characterised in that** the installation (1), the blocking apparatus (6) or the commissioning apparatus (14) has an apparatus (23) for applying a protective layer or protective film (5) to the lenses (2), in particular the blocking side (2A) thereof, the apparatus (23) for applying the protective layer or protective film (5) preferably being arranged downstream of the commissioning apparatus (14) and/or upstream of the blocking apparatus (6).

9. Installation according to one of the preceding claims, **characterised in that** the installation (1) has a commissioning apparatus (14) for equipping the transport carriers (12) with lenses (2) to be processed and block pieces (3), and/or that the installation (1) forms or has a first and/or second circuit (K1, K2) for the transport carriers (12, 13) and a further or third circuit (K3) for the block pieces (3).

10. Method for processing lenses (2), in particular spectacle lenses, wherein the lenses (2) are processed by processing apparatuses (7, 9), wherein each lens (2) for processing is blocked on a block piece (3) by means of a blocking material (4) in a blocking apparatus (6) and after processing is deblocked again from the block piece (3) in a deblocking apparatus (8),
**characterised in**
**that** the lenses (2) are conveyed in or on transport carriers (12) from the blocking apparatus (6) to the processing apparatuses (7, 9) and the deblocking apparatus (8), wherein the transport carriers (12) are return-conveyed after deblocking or from the deblocking apparatus (8) by means of a return conveying apparatus (15) and are equipped by machine either in the blocking apparatus (6) with blocked lenses (2) to be processed or in a commissioning apparatus (14) with lenses (2) to be processed and optionally block pieces (3).

11. Method according to claim 10, **characterised in**
**that** the deblocked block pieces (3) are return-conveyed by machine by means of transport carriers (12) and/or a return conveying apparatus (17) from the deblocking apparatus (8) to the blocking apparatus (6) or an upstream commissioning apparatus (14), and/or
**that** the transport carriers (12, 13) are conveyed or return-conveyed in a circuit (K1, K2) and the block pieces (3) are conveyed or return-conveyed in a further or separate circuit (K3), and/or
**that** the lenses (2) are provided with a protective layer or protective film (5) on their blocking side (2A) before blocking and that the protective layer or protective film (5) is removed again after deblocking the respective lens (2) in the deblocking apparatus (8) and/or before coating the blocking side (2A) and/or before further processing, particularly preferably edge processing, of the respective lens (2).

12. Method according to claim 10 or 11, **characterised in that** the transport carriers (12) are cleaned and/or optically checked.

13. Method according to one of claims 10 to 12, **characterised in that** the block pieces (3) are sorted according to size and/or shape.

14. Method according to one of claims 10 to 13, **characterised in that** the block pieces (3) are optically checked.

15. Method according to one of claims 10 to 14, **characterised in that** the transport carriers (12, 13) are provided with information or information carriers (22) with respect to the processing of the respective lenses (2), in particular wherein the information is read, used, changed and/or adapted by the processing apparatuses (7, 9).

## Revendications

1. Installation (1) destinée à l'usinage de lentilles (2), en particulier de verres de lunettes,
avec un dispositif de blocage (6) destiné à bloquer une lentille (2) à usiner sur une pièce de blocage (3) au moyen d'un matériau de blocage (4),
avec plusieurs dispositifs d'usinage (7, 9) destinés à usiner les lentilles (2), et
avec un dispositif de déblocage (8) destiné à débloquer les lentilles (2) usinées, et
avec un système de transport (11) destiné à convoyer les lentilles (2) dans ou sur des supports de transport (12, 13),
**caractérisée en ce**
**que** l'installation (1) présente un dispositif de convoyage de retour (15, 17) destiné à ramener les pièces de blocage (3) et/ou les supports de transport (12) vers le dispositif de blocage (6) ou vers un dispositif de préparation de commandes (14) destiné à charger les supports de transport (12) en lentilles (2) à usiner et en pièces de blocage (3).

2. Installation selon la revendication 1, **caractérisée en ce que** l'installation (1), le dispositif de blocage (6), le dispositif de déblocage (8) ou le dispositif de préparation de commandes (14) présentent un dispositif (19, 21) destiné à nettoyer les supports de transport (12, 13).

3. Installation selon la revendication 1 ou 2, **caractérisée en ce que** l'installation (1), le dispositif de blocage (6), le dispositif de déblocage (8) ou le dispositif de préparation de commandes (14) présentent un dispositif (19) destiné à contrôler optiquement les supports de transport (12).

4. Installation selon l'une quelconque des revendications précédentes, **caractérisée en ce que** l'installation (1), le dispositif de blocage (6), le dispositif de déblocage (8) ou le dispositif de préparation de commandes (14) présentent un dispositif (18) destiné à contrôler optiquement les pièces de blocage (3).

5. Installation selon l'une quelconque des revendications précédentes, **caractérisée en ce que** l'installation (1), le dispositif de blocage (6), le dispositif de déblocage (8) ou le dispositif de préparation de commande (14) présentent un dispositif (18) destiné à stocker les pièces de blocage (3).

6. Installation selon l'une quelconque des revendications précédentes, **caractérisée en ce que** l'installation (1), le dispositif de blocage (6), le dispositif de déblocage (8) ou le dispositif de préparation de commandes (14) présentent un dispositif (18) destiné à trier les pièces de blocage (3) selon la taille et/ou la forme.

7. Installation selon l'une quelconque des revendications précédentes, **caractérisée en ce que** l'installation (1) ou le dispositif de déblocage (8) présente un dispositif destiné à retirer une couche de protection ou un film de protection (5) des lentilles (2), en particulier de leur côté de blocage (2A).

8. Installation selon l'une quelconque des revendications précédentes, **caractérisée en ce que** l'installation (1), le dispositif de blocage (6) ou le dispositif de préparation de commandes (14) présentent un dispositif (23) destiné à appliquer une couche de protection ou un film de protection (5) sur les lentilles (2), en particulier leur côté de blocage (2A), de préférence dans laquelle le dispositif (23) destiné à appliquer la couche de protection ou le film de protection (5) est disposé en aval du dispositif de préparation de commandes (14) et/ou est disposé en amont du dispositif de blocage (6).

9. Installation selon l'une quelconque des revendications précédentes, **caractérisée en ce que** l'installation (1) présente un dispositif de préparation de commandes (14) destiné à charger les supports de transport (12) en lentilles (2) à usiner et en pièces de blocage (3),
et/ou
**que** l'installation (1) forme ou présente un premier et/ou un deuxième circuit (K1, K2) pour les supports de transport (12, 13) et un autre ou troisième circuit (K3) pour les pièces de blocage (3).

10. Procédé d'usinage de lentilles (2), en particulier de verres de lunettes, dans lequel les lentilles (2) sont usinées par des dispositifs d'usinage (7, 9), dans lequel chaque lentille (2) est bloquée pour l'usinage sur une pièce de blocage (3) au moyen d'un matériau de blocage (4) dans un dispositif de blocage (6) et est à nouveau débloquée après l'usinage de la pièce de blocage (3) dans un dispositif de déblocage (8),
**caractérisé en ce**
**que** les lentilles (2) sont convoyées dans ou sur des supports de transport (12) depuis le dispositif de blocage (6) aux dispositifs d'usinage (7, 9) et au dispositif de déblocage (8), dans lequel les supports de transport (12) sont ramenés après le déblocage ou depuis le dispositif de déblocage (8) au moyen d'un dispositif de convoyage de retour (15) et sont chargés mécaniquement soit avec des lentilles (2) à usiner bloquées dans le dispositif de blocage (6) soit avec des lentilles (2) à usiner et en option avec des pièces de blocage (3) dans un dispositif de préparation de commandes (14).

11. Procédé selon la revendication 10, **caractérisé en ce**
**que** les pièces de blocage (3) débloquées sont ramenées mécaniquement au moyen de supports de transport (12) et/ou d'un dispositif de convoyage de retour (17) depuis le dispositif de déblocage (8) vers le dispositif de blocage (6) ou un dispositif de préparation de commandes (14) disposé en amont, et/ou
**que** les supports de transport (12, 13) sont convoyés ou sont ramenés dans un circuit (K1, K2) et les pièces de blocage (3) sont convoyées ou sont ramenées dans un circuit (K3) autre ou séparé, et/ou
**que** les lentilles (2) sont pourvues sur leur côté de blocage (2A) avant le blocage d'une couche de protection ou d'un film de protection (5), et que la couche de protection ou le film de protection (5) est retirée/retiré à nouveau après le déblocage de la lentille (2) respective dans le dispositif de déblocage (8) et/ou avant un revêtement du côté de blocage (2A) et/ou avant un autre usinage, de manière particulièrement préférée un usinage de bord de la lentille (2) concernée.

12. Procédé selon la revendication 10 ou 11, **caractérisé en ce que** les supports de transport (12) sont nettoyés et/ou contrôlés optiquement.

13. Procédé selon l'une quelconque des revendications 10 à 12, **caractérisé en ce que** les pièces de blocage (3) sont triées selon la taille et/ou la forme.

14. Procédé selon l'une quelconque des revendications 10 à 13, **caractérisé en ce que** les pièces de blocage (3) sont contrôlées optiquement.

15. Procédé selon l'une quelconque des revendications 10 à 14, **caractérisé en ce que** les supports de transport (12, 13) sont pourvus d'informations ou de supports d'informations (22) concernant l'usinage des lentilles (2) respectives, en particulier dans lequel les informations sont lues, utilisées, modifiées et/ou adaptées par les dispositifs d'usinage (7, 9).
